# EUROPEAN PATENT SPECIFICATION

(11) **EP 3 118 785 B1**
(45) Date of publication and mention of the grant of the patent: **21.11.2018**
(21) Application number: 16178456.6
(22) Date of filing: 07.07.2016
(51) Int. Cl.: G06Q 10/08, G01C 21/32, G08G 5/00, G06K 9/00, G08G 5/02, G06Q 50/30, B64D 1/02

(54) **METHOD AND APPARATUS FOR PROVIDING GEOGRAPHIC DELIVERY LOCATIONS FOR AERIAL PACKAGE DELIVERY**
VERFAHREN UND VORRICHTUNG ZUR BEREITSTELLUNG GEOGRAFISCHER LIEFERUNGSSTANDORTE FÜR PAKETLIEFERUNG PER LUFT
PROCÉDÉ ET APPAREIL PERMETTANT DE FOURNIR DES EMPLACEMENTS DE DISTRIBUTION GÉOGRAPHIQUE POUR LIVRAISON AÉRIENNE DE COLIS

(30) Priority: 09.07.2015 US 201514795566
(43) Date of publication of application: 18.01.2017
(73) Proprietor: HERE Global B.V., 5611 ZT Eindhoven (NL)
(72) Inventor: Stenneth, Leon, Chicago, IL Illinois 60608 (US); Modica, Leo, Sawyer, MI Michigan 49125 (US)
(74) Representative: Cohausz & Florack

(56) References cited:
- JP-A- 2011 214 887
- US-A1- 2014 330 456
- US-A1- 2015 120 094

## Description

### BACKGROUND

Service providers and device manufacturers (e.g., wireless, cellular, etc.) are continually challenged to deliver value and convenience to consumers by, for example, providing compelling network services. One area of interest has been delivery of goods to intended purchasers at their respective geographic delivery locations via an aerial based package delivery vehicle. However, an aerial based package delivery vehicle encounters significant technical challenges in detecting a surface of a delivery location at which a delivery package can be placed (e.g., an entrance, a driveway, etc.). In addition, the aerial based package delivery vehicle faces technical difficulty in detecting obstructions present at the delivery locations. Accordingly, there is a need for providing geographic delivery locations for aerial package delivery vehicles to safely delivery packages. US2014/0330456 A1 discloses a method of landing site designation in an autonomous delivery network, whereby user-designated autonomous delivery locations are verified to be on level ground and/or free from any land obstructions.

US2015/0120094 A1 discloses an unmanned aerial vehicle delivery system whereby the UAV identifies a fairly level surface, like a table, the ground, a chair, a balcony, for disengaging inventory at a delivery destination.

### SOME EXAMPLE EMBODIMENTS

Therefore, there is a need for an approach for providing geographic delivery locations for aerial package delivery.

According to one embodiment, a method, implemented by an apparatus, comprises determining building footprint information for at least one building associated with at least one geographic address. The method also comprises determining source data associated with the at least one building, the at least one geographic address, or a combination thereof. The source data include at least one of Light Detection And Ranging (LIDAR) information, building schematic information, probe data, sensor data, aerial imagery data, depth map information, imagery information, crowd-sourced information, or a combination thereof. The method further comprises processing and/or facilitating a processing of the building footprint information and the source data to determine one or more entrances associated with the at least one building. The method also comprises processing and/or facilitating a processing of the source data associated with the one or more entrances to determine one or more delivery surfaces for the at least one geographic address. The one or more delivery surfaces are for delivering one or more packages by an aerial-based package delivery.

According to another embodiment, an apparatus comprises means for performing at least the above-mentioned method.

According to another embodiment, a computer-readable storage medium carries one or more sequences of one or more instructions which, when executed by one or more processors, cause, at least in part, an apparatus to perform the above-mentioned method.

According to another embodiment, a computer program product includes one or more sequences of one or more instructions which, when executed by one or more processors, cause an apparatus to perform at least the above-mentioned method.

In various example embodiments, the methods (or processes) can be accomplished on the service provider side or on the mobile device side or in any shared way between service provider and mobile device with actions being performed on both sides.

For various example embodiments, the following is applicable: An apparatus comprising means for performing the method of any of claims 1-8.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the scope of the invention. Accordingly, the drawings and description are to be regarded as illustrative in nature, and not as restrictive.

### BRIEF DESCRIPTION OF THE DRAWINGS

The embodiments of the invention are illustrated by way of example, and not by way of limitation, in the figures of the accompanying drawings:
FIG. 1 is a diagram of a system capable of providing geographic delivery locations for aerial package delivery, according to one embodiment;
FIG. 2 is a diagram of the components of a package delivery platform, according to one embodiment;
FIG. 3 is a flowchart of a process for processing building footprint information and source data to determine delivery surfaces for delivering packages, according to one embodiment;
FIG. 4 is a flowchart of a process for processing the building footprints and/or the source data to determine obstacles and/or restricted area surfaces, according to one embodiment;
FIG. 5 is a flowchart of a process for validating the obstacles and/or restricted area surfaces, according to one embodiment;
FIG. 6 is a flowchart of a process for ranking the delivery surfaces for a geographic address, according to one embodiment;
FIGs. 7A-7D are diagrams that represent delivery surfaces and/or delivery edges and/or restricted area surfaces associated with a building and/or the geographic address, according to one example embodiment;
FIG. 8 is a grid diagram that represents information of obstacles present at the geographical address, according to one example embodiment;
FIG. 9 is a diagram of hardware that can be used to implement an embodiment of the invention;
FIG. 10 is a diagram of a chip set that can be used to implement an embodiment of the invention; and
FIG. 11 is a diagram of a mobile terminal (e.g., handset) that can be used to implement an embodiment of the invention.

### DESCRIPTION OF SOME EMBODIMENTS

Examples of a method, apparatus, and computer program for providing geographic delivery locations for aerial package delivery are disclosed. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

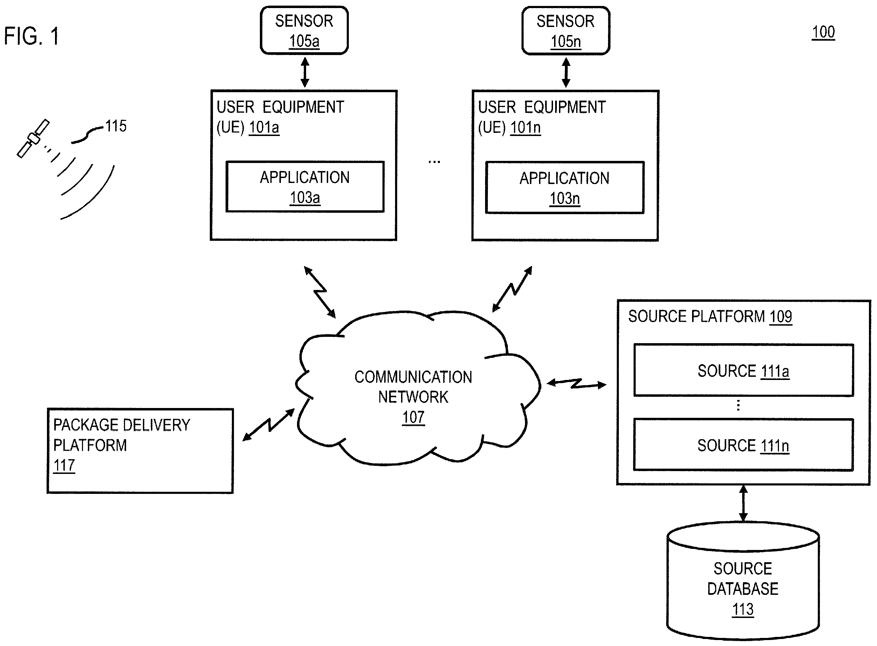

FIG. 1 is a diagram of a system capable of providing geographic delivery locations to aerial based package delivery vehicles for delivering packages, according to one embodiment. Generally, a user provides a geographical location for delivery of a purchased package. For example, a user purchases a package from an ecommerce website and orders it for home delivery at a geographical location. Aerial based package delivery vehicles or autonomous vehicles, nowadays, provide the delivery of the package to the geographical location. However, while delivering packages at the geographical locations, the aerial based package delivery vehicles may not know at which surface the package is to be delivered, or whether any obstacle is present on the surface or not. For example, an aerial based package delivery vehicle delivers a package on bushes along a walkway of a building. The delivery of the package on the bushes may damage the package. In addition, the aerial based package delivery vehicle may be trapped in the bushes while delivering the package, which further damages the aerial based package delivery vehicle. As a result, there is a need for a method wherein at least one geographic delivery location associated with at least one user is provided to at least one an aerial based package delivery vehicle for a safe delivery of at least one package.

To address this problem, a system 100 of FIG. 1 introduces the capability to provide geographic delivery locations to aerial based package delivery vehicles for delivering packages at geographic addresses. In one embodiment, a surface associated with a building is determined, upon which a package may be delivered by an aerial based package delivery vehicle. The surface of a building upon which a package may be delivered is referred to as a delivery surface of the building. In addition, delivery surfaces associated with a building are determined from various sources to deliver packages.

As shown in FIG. 1, the system 100 comprises user equipment 101a-101n (collectively referred to as user equipment 101). In one embodiment, the user equipment 101 may include, but is not restricted to, any type of a mobile terminal, fixed terminal, or portable terminal. Examples of the user equipment 101, may include, but are not restricted to, a mobile handset, a station, a unit, a device, a multimedia computer, a multimedia tablet, an Internet node, a communicator, a desktop computer, a laptop computer, a notebook computer, a netbook computer, a tablet computer, a Personal Communication System (PCS) device, a personal navigation device, a Personal Digital Assistant (PDA), or any combination thereof, including the accessories and peripherals of these devices, or any combination thereof. In one embodiment, the user equipment 101 may support any type of interface for supporting the presentment of geographic delivery locations to aerial based package delivery vehicle for delivering packages. In addition, the user equipment 101 may facilitate various input means for receiving and generating information, including, but not restricted to, a touch screen capability, a keyboard and keypad data entry, a voice-based input mechanism, and the like. Any known and future implementations of the user equipment 101 may also be applicable.

The user equipment 101 may further include applications 103a-103n (collectively referred to as application 103). Further, the application 103 may include various applications such as, but not restricted to, ecommerce application, package tracking/reading application, location-based service application, navigation application, content provisioning application, camera/imaging application, media player application, social networking application, and the like. In one embodiment, the application 103 is installed within the user equipment 101. In one example embodiment, an ecommerce application is installed in the user equipment 101 to enable a user to purchase packages from multiple ecommerce websites. In another embodiment, the application 103 may be considered as a Graphical User Interface (GUI) that provides options to the user to select and purchase packages from the ecommerce websites. For example, a user searches on an ecommerce website and desires to purchase a mobile phone, then the user selects a mobile phone and initiates a financial transaction to purchase it. In yet another embodiment, the application 103 may generate notifications for notifying users about delivery of packages to a delivery location associated with the users. For example, the notification may provide data such as, date, day, and time, or address at which a package is going to be delivered. In another example, the notification may provide data such as, date, day, time, or place at which a package is delivered.

The system 100 also includes sensor 105a-n (collectively referred to as sensor 105). The sensor 105 may be any type of sensor. In certain embodiments, the sensor 105 may include, for example, but not restricted to, a global positioning sensor for gathering location data, Light Detection And Ranging (LIDAR) for gathering distance data and/or generating depth maps, a network detection sensor for detecting wireless signals or receivers for different short-range communications (e.g., Bluetooth, Wi-Fi, Li-Fi, Near Field Communication (NFC) etc.), temporal information sensors, a camera/imaging sensor for gathering image data, a package tracking sensor for tracking the package movement, and the like.

Further, various elements of the system 100 may communicate with each other through a communication network 107. The communication network 107 of the system 100 includes one or more networks such as, but not restricted to, a telephony network, service provider network, a data network, a wireless network, and the like. For illustrative purposes, the communication network 107 may be any suitable wireless network, and is managed by service providers. For example, the telephony network may include, but is not restricted to, a circuit-switched network, such as the Public Switched Telephone Network (PSTN), an Integrated Services Digital Network (ISDN), a Private Branch Exchange (PBX), or other like networks. The communication network 107 may be separate entities and/or completely or partially contained within one another, or may embody of the aforementioned infrastructures. For instance, the service provider network may embody circuit-switched and/or packet-switched networks that may include facilities to provide for transport of circuit-switched and/or packet-based communications. It is further contemplated that the communication network 107 may include components and facilities to provide signaling and/or bearer communications between the various elements or facilities of the system 100. In this manner, the communication network 107 may embody or include portions of a Signaling System 7 (SS7) network, or other suitable infrastructure to support control and signaling functions. In addition, the system 100 may operate as separate parts that rendezvous and synchronize periodically to form a larger system with similar characteristics. Further, the data network may be any Local Area Network (LAN), Metropolitan Area Network (MAN), Wide Area Network (WAN), the Internet, or any other suitable packet-switched network, such as a commercially owned, proprietary packet-switched network, such as a proprietary cable or fiber-optic network. Further, the wireless network may employ various technologies including, for example, Code Division Multiple Access (CDMA), Enhanced Data Rates For Global Evolution (EDGE), General Packet Radio Service (GPRS), Mobile Ad Hoc Network (MANET), Global System For Mobile Communications (GSM), 4G Long-Term Evolution (LTE), Internet Protocol Multimedia Subsystem (IMS), Universal Mobile Telecommunications System (UMTS), etc., as well as any other suitable wireless medium, e.g., microwave access (WiMAX), Wireless Fidelity (Wi-Fi), satellites, Wireless LAN (WLAN), Bluetooth®, Internet Protocol (IP) data casting, and the like, or any combination thereof.

The system 100 further includes a source platform 109 including one or more sources 111a-n (collectively referred to as source 111). The source 111 is used to determine source data associated with a building, a geographic location, or a combination thereof. In one implementation, the building is associated with the geographic location. In one embodiment, the geographic location is a geographic delivery location of a package. The source 111 includes any of Light Detection And Ranging (LIDAR), building schematics, pedestrian probes, sensors such as the sensor 105, aerial imagery, depth maps, crowd-sources, and the like, or a combination thereof. In an embodiment, the source data may be retrieved from satellites 115 in real time, and the like. The source platform 109 may create a source database 113 to store the determined source data.

Further, the system 100 includes a package delivery platform 117 to deliver packages safely at geographic delivery locations by aerial based package delivery vehicles. The package delivery platform 117 is configured to determine building footprint information for a building associated with a geographic address. A building can be, but not restricted to, a residential building (e.g., a house), commercial building (e.g., an office, a shop, etc.). In one embodiment, the building may be either a low-rise (e.g., single-story) building, or a multistory building. In one example embodiment, a user purchases an item from an ecommerce website and provides a geographic address for the delivery of the item then the package delivery platform 117 determines building footprint information for a building associated with the geographic address. In one embodiment, the building footprint information associated with the building may be retrieved from the source database 113. In another embodiment, the building footprint information may be retrieved from a third party database. The package delivery platform 117 is further configured to determine the source data associated with the building and/or geographic address. As previously noted, the source data may be retrieved from the source 111 such as LIDAR, pedestrian probes, sensors, depth maps, aerial imagery, crowd sourcing, and the like, or a combination thereof.

Further, the package delivery platform 117 is configured to process the determined building footprint information, and the source data to determine entrances associated with the building. The entrance associated with the building is a point from which a user may enter into the building. Examples of the entrance may include, but not restricted to, a front door, a back door, a side door, a window, a balcony, and the like, or a combination thereof. Further, the package delivery platform 117 is configured to process the source data associated with the entrances to determine delivery surfaces for the geographic address. A delivery surface is a surface upon which a package may be delivered by the aerial based package delivery vehicle. In an embodiment, the delivery surface may be, but not restricted to, a three-dimensional horizontal surface that may comprise of three-dimensional splines. Examples of the delivery surface may be a surface of a, but not restricted to, driveway, walkway, porch, rooftop, and the like. In another embodiment, the delivery surface may be, but not restricted to, a vertical surface such as a wall.

Further, the package delivery platform 117 is configured to process the source data associated with the entrances to determine delivery edges for the delivery surfaces. A delivery edge is a preferred side of the delivery surface for placing a delivery package. The package delivery platform 117 is further configured to process the source data, building footprint information, or a combination thereof to determine approach paths to the entrances, the building, the geographic address, or a combination thereof. The approach path may be a path associated with a building through which a user may walk towards an entrance of the building. In one embodiment, the approach paths may include, but are not restricted to, driveways, walkways, porches, rooftops, and the like, or a combination thereof. The package delivery platform 117 is further configured to determine restricted access surfaces associated with the geographic address, building, entrances, approach paths, and the like, or a combination thereof. A restricted access surface is a surface surrounding the delivery surface, which may be impenetrable by the aerial based package delivery vehicle. In one embodiment, delivery of a delivery package is restricted on the restricted access surfaces. Examples of the restricted access surface includes surface of, but are not restricted to, walls, doors, windows, gardens, and the like of a building associated with a geographic address. In one embodiment, a restricted access surface may be adjacent to one or more delivery surfaces. In another embodiment, a restricted access surface may be adjacent to other restricted access surfaces, such as overhead.

The package delivery platform 117 is further configured to determine obstacles associated with the geographic address, building, entrances, approach paths, and the like, or a combination thereof. The package delivery platform 117 determines the restricted access surfaces and obstacles in order to deliver a delivery package safely on the delivery surface of the building associated with the geographic address. The package delivery platform 117 is further configured to generate a rank for each of the delivery surfaces. The package delivery platform 117 is further configured to transmit geographic delivery location to an aerial based package delivery vehicle to place a delivery package safely. In one example embodiment, the aerial based delivery vehicle may hang the package at a vertical surface of a wall.

By way of example, the UE 101, the source platform 109, and the package delivery platform 117 communicate with each other and other components of the communication network 107 by using well known, new or still developing protocols. In this context, a protocol includes a set of rules defining how the network nodes within the communication network 107 interact with each other based on information sent over communication links. The protocols are effective at different layers of operation within each node, from generating and receiving physical signals of various types, to select a link for transferring those signals, to the format of information indicated by those signals, to identify which software application executing on a computer system sends or receives the information. The conceptually different layers of protocols are described for exchanging information over a network in the Open Systems Interconnection (OSI) Reference Model. Communications between the network nodes are typically effected by exchanging discrete packets of data. Each packet typically comprises (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol may be encapsulated in the lower layer protocol. The headers included in a packet traversing multiple heterogeneous networks, such as the Internet, typically include a physical (layer 1) header, a data-link (layer 2) header, an internetwork (layer 3) header and a transport (layer 4) header, and various application (layer 5, layer 6 and layer 7) headers as defined by the OSI Reference Model.

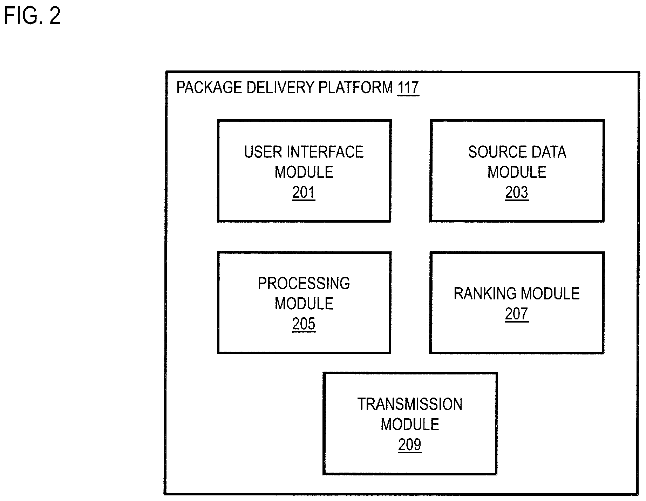

FIG. 2 is a diagram of components of the package delivery platform 117, according to one embodiment. By way of example, the package delivery platform 117 includes one or more components for providing geographic delivery locations to an aerial based package delivery vehicle for delivering packages at geographic addresses. It is contemplated that the functions of these components may be combined in one or more components or performed by other components of equivalent functionality. In this embodiment, the package delivery platform 117 includes a user interface module 201, a source data module 203, a processing module 205, a ranking module 207, and a transmission module 209.

In one embodiment, the user interface module 201 may receive a geographic address to deliver a delivery package at the geographic address. The geographic address may include, but not restricted to, a house number, a floor number (in case of multistory building), a street name, a district, a country, a postal code, and the like, or a combination thereof. In one implementation, the user interface module 201 may receive the geographic address from a user associated with the geographic address. In another implementation, the user interface module 201 may determine the geographic address associated with the user from a navigation device (e.g., a GPS device) used by the user. In other implementation, the geographic address may be determined from a user profile associated with an ecommerce website. In another implementation, the location and/or position of the UE 101 associated with the user is used to determine the geographic address. In another embodiment, the user interface module 201 may receive user inputs from a user for initially specifying obstacles associated with the geographic address. Examples of the obstacles may include, but are not restricted to, flowerpots, trees, bushes, cars, doormats, animals, and the like. In a further embodiment, the user interface module 201 may receive user inputs from the user specifying restricted access surfaces associated with the geographic address. In one embodiment, the user interface module 201 may receive user inputs that specify a delivery surface upon which the user may desire to receive the delivery package.

In one embodiment, the source data module 203 may retrieve building footprint information for a building associated with the geographic address of the user. In one implementation, the building footprint information may be retrieved from the source database 113. In another implementation, the building footprint information may be retrieved from a third party database. In a further implementation, the building footprint information may be retrieved from aerial imagery in real time environment. In another embodiment, the source data module 203 may retrieve source data associated with the building, the geographic address, or a combination thereof. The source data may include, but not restricted to, building schematics information, LIDAR information, probe data, sensor data, depth map information, aerial imagery data (e.g., pavements adjoining a main entrance), imagery information, crowd-sourced information, and the like, or a combination thereof. In one implementation, the source data may be retrieved from numerous sources such as, but not restricted to, LIDAR, building schematics, depth maps, crowd sourcing (e.g., neighbors), aerial imagery, pedestrian probes (e.g., building owners, package delivery drivers, etc.), and the like, or a combination thereof. In one scenario, LIDAR data may be captured by one or more vehicles (e.g., a smart vehicle, an airplane, a drone, etc.).

In one embodiment, the processing module 205 may process and/or facilitate the building footprint information to determine entrances associated with the building. In another embodiment, the processing module 205 may process and/or facilitate the source data associated with the entrances to determine delivery surfaces for the geographic address. The delivery surface is an instance of a simple surface that may include a single outer boundary. A surface may be composed of a single boundary and zero or more boundaries representing holes that are expected to lie geometrically within the outer boundary. In one embodiment, a delivery surface may adjoin one or more delivery surfaces at the geographic address. In one scenario, the interior of the delivery surface may be tessellated, or generalized as needed for the package delivery. In one implementation, the delivery surface is a surface for delivering packages by an aerial based package delivery vehicle. In one embodiment, the processing module 205 processes the building footprint information, and/or the source data to determine dimensions of the delivery surface.

In one embodiment, the processing module 205 may process and/or facilitate the source data associated with the entrances to determine delivery edges for the delivery surfaces. A delivery edge is a preferred side of the delivery surface for placing delivery packages. In one implementation, the delivery edges are determined if the delivery surface is larger than a threshold size. For example, a threshold size of a delivery surface is one meter and a size of a delivery surface such as, a walkway, is five meters, then a delivery edge for the walkway is determined. In another implementation, if a delivery edge is not defined for a delivery surface, then middle of the delivery surface is determined as a prescribed point of delivery.

In one embodiment, the processing module 205 may further process and/or facilitate the building footprint information, the source data, or a combination thereof, to determine approach paths to the entrances, building, geographic address, or a combination thereof. The approach path may be a path associated with a building through which a user may walk towards an entrance of the building associated with a geographic address. The approach path may include, but not restricted to, a walkway, a driveway, a porch, and the like, or a combination thereof. In one scenario, the delivery surfaces, delivery edges, and/or entrances associated with the building are determined based on the approach paths.

In one embodiment, the processing module 205 may process and/or facilitate the building footprint information, the source data, or a combination thereof, to determine obstacles associated with the approach paths, entrances, building, geographic address, or a combination thereof. Examples of the obstacles may include static obstacles such as, but are not restricted to, flowerpots, trees, bushes, doormats, and the like. In one embodiment, the processing module 205 may determine mobile objects such as, but not restricted to, vehicles parked in a driveway. For example, at a time when the source 111 determines obstacles at the approach paths, a mobile obstacle such as a car is not present on a driveway, however, after an hour, the mobile obstacle is placed at the driveway of the building. Therefore, the processing module 205 may determine mobile obstacles placed at an approach path, entrances, building, and/or at a geographic address. In one implementation, the processing module 205 determines real time GPS locations of objects present in the approach paths to detect whether the objects are obstacles or not. In another implementation, infrared (IR) techniques may be used by the aerial based package delivery vehicle to determine mobile obstacles such as, a human, an animal, etc. In one example embodiment, body heat and movement of a mobile object are detected to identify a mobile obstacle at a delivery surface at the time of package delivery at the geographic address. In one implementation, locations of the mobile obstacles may be determined in real time. In another implementation, a GPS device that may be worn by the mobile obstacles may be used to determine locations of the mobile obstacles in real time. The obstacles are impenetrable with respect to the aerial based package delivery. As previously noted, the obstacles may be determined based on the user inputs received from the user by the user interface module 201. For example, a user may use a GPS device to mark location of obstacles in a backyard associated with a geographic address. In one implementation, the obstacles may be determined based on the source data stored in the source database 113. The processing module 205 processes the source data to extract geographic locations of the obstacles associated with the approach paths. In one scenario, image recognition algorithms may be used to process aerial satellite imagery such as, a street view, to mine locations of obstacles associated with the geographic address. Therefore, complex and time consuming processing of LIDAR information may be avoided. In another scenario, pedestrian probe data may be used to determine geographic locations of obstacles at the geographic address. For example, an area that is not traversed by pedestrians or an area that is less frequently traversed by the pedestrians is determined as a location of an obstacle. The geographic location may include, but not restricted to, geographic coordinates of the obstacles. The geographic coordinates may include, but not restricted to, latitude, longitude, and/or altitude. The processing module 205 processes the source data to extract properties of the obstacles associated with the approach paths of the geographic address. The properties of the obstacles may include, but not restricted to, a category, dimensions, height, radius, coverage of package delivery obstacles, and the like, or a combination thereof. In another example embodiment, an aerial based delivery vehicle may determine an obstacle at a geographic address and the aerial based delivery vehicle then uses information associated with the obstacles at the geographic address to determine if objects placed at another geographic address are obstacles or not. For example, properties (e.g., height, width, etc.) of a first car at a first geographic address is determined and properties of an object such as, a second car, are also determined. The properties of the first car and the object are compared and in case, the object is having the same properties as the first car, then the object is recognized as an obstacle located at a second geographic address.

In one embodiment, the processing module 205 may update locations and properties of obstacles at geographic addresses. In one example embodiment, a user at a geographic address may change the location of a flowerpot then a new location of the flowerpot is determined and stored in the source database 113. In another example embodiment, in spring flowers bloom and grow taller and therefore, properties of flowerpots at a geographic address are updated in the source database 113. In one implementation, the locations and properties of obstacles at geographic addresses may be updated periodically by using the source 111. In another implementation, a package delivery driver may update the locations and properties of obstacles at geographic addresses automatically when passing through the geographic addresses. In a further implementation, the user may provide inputs to update locations and properties of obstacles at geographic addresses stored in the source database 113. The obstacles placed on the delivery surface may intervene while delivering delivery packages to the geographic addresses by the aerial based package delivery. In one embodiment, the processing module 205 may store the locations and properties of the obstacles in a database such as the source database 113.

In one embodiment, the processing module 205 may process and/or facilitate a processing of the building footprint information and/or the source data to determine restricted access surfaces associated with the approach paths, entrances, building, geographic address, or a combination thereof. A restricted access surface is a surface associated with a delivery surface, which may be impenetrable by an aerial based package delivery. In one embodiment, delivery of a delivery package is restricted on a restricted access surface associated with the geographic address. Examples of the restricted access surfaces may include surfaces of, but not restricted to, walls, doors, windows, gardens, and the like. In one scenario, depth map information that may provide a horizontal view of the geographic address may be used to determine restricted access surface associated with the approach paths, entrances, building, geographic address, or a combination thereof. In another scenario, aerial imagery information received from satellites such as, the satellite 115, may be used to determine restricted access surface, in case, LIDAR information is not available.

In one embodiment, the ranking module 207 may validate the obstacles, restricted access surface, or a combination thereof associated with the geographic address. In one implementation, the obstacles and/or restricted access surfaces may be validated by using secondary sources. In one example embodiment, a tenant of the geographic address may validate obstacles and/or restricted access surfaces determined from numerous sources such as the source 111 at the geographic address by using a GPS device. In another example embodiment, a delivery package driver may validate the obstacles, their locations and properties and/or restricted access surfaces while delivering packages at geographic addresses. In another embodiment, the ranking module 207 may generate ranks for the delivery surfaces based on proximity to the entrance of the building associated with the geographic address. In one example embodiment, a rank '1' may be generated for a porch that is nearest to an entrance of a building associated with a geographic address, and a rank '5' may be generated for a driveway that is farthest from the entrance of the building. In another embodiment, the ranking module 207 may generate ranks for the delivery surfaces based on number of obstacles, restricted access surface, or a combination thereof. In one example embodiment, three obstacles are placed at a first delivery surface, four obstacles are placed at a second delivery surface, and one obstacle is placed at a third delivery surface, then a rank '1' may be generated for the third delivery surface, a rank '2' may be generated for the first delivery surface, and a rank '3' may be generated for the second delivery surface.

In one embodiment, the transmission module 209 may cause transmission of the geographic delivery location of the building associated with the geographic address over the communication network 107 to an aerial based package delivery vehicle for a package delivery. In another embodiment, the transmission module 209 may cause transmission of the locations of obstacles and/or restricted access surface associated with the approach paths of the geographic address and may avoid them while delivering packages at the geographic addresses. The transmission module 209 may cause transmission of the geographic location to the aerial based package delivery vehicle in real time environment. Further, based on the geographic location, the aerial based delivery vehicle may deliver the package at the delivery surface associated with the geographic address.

The above presented modules and components of the package delivery platform 117 may be implemented in hardware, firmware, software, or a combination thereof. In another embodiment, one or more of the modules 201-209 may be implemented for operation by respective aerial based package delivery vehicles. The various executions presented herein contemplate any and all arrangements and models.

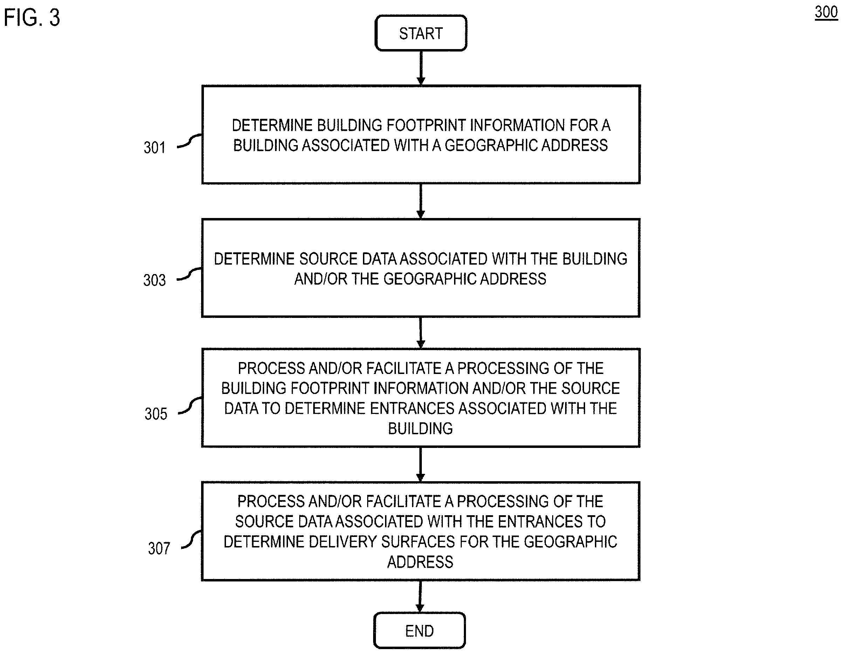

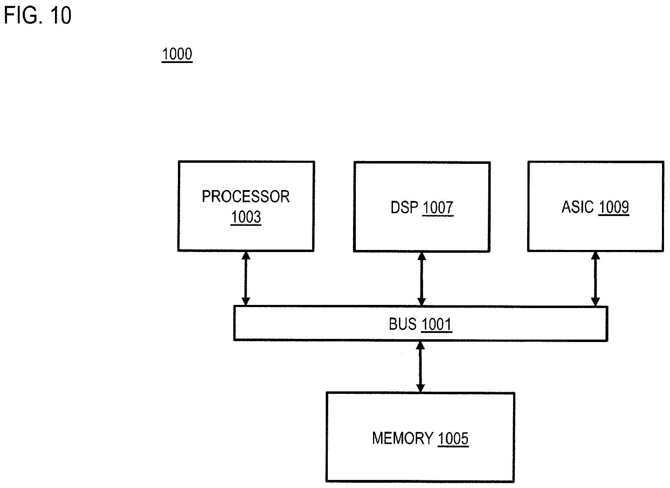

FIG. 3 is a flowchart of a process for determining delivery surfaces for a geographic address, according to one embodiment. In one embodiment, the package delivery platform 117 performs the process 300 and may be implemented in, for instance, a chip set including a processor and a memory as shown in FIG. 10.

In step 301, the package delivery platform 117 determines building footprint information for a building associated with a geographic address. In one implementation, the building footprint information may be determined from the source database 113. In another implementation, the building footprint information may be determined from a third party database. In a further implementation, the building footprint information may be determined from aerial imagery in real time environment.

In step 303, the package delivery platform 117 determines source data associated with the building, the geographic address, or a combination thereof. The source data may include, but not restricted to, building schematics information, LIDAR information, probe data, sensor data, depth map information, aerial imagery data, imagery information, crowd-sourced information, and the like, or a combination thereof. In one implementation, the source platform 109 determines the source data from numerous sources such as, but not restricted to, LIDAR, building schematics, depth maps, crowd sourcing, aerial imagery, pedestrian probes, and the like, or a combination thereof.

Next, in step 305, the package delivery platform 117 processes and/or facilitates a processing of the building footprint information and/or the source data to determine entrances of the building associated with the geographic address. In one implementation, the building may have one or more entrances. In one example embodiment, the package delivery platform 117 determines a main entrance of the building.

Further, in step 307, the package delivery platform 117 processes and/or facilitates a processing of the source data associated with the entrances to determine delivery surfaces for the geographic address. The delivery surfaces may be determined to deliver delivery packages safely at the geographic address.

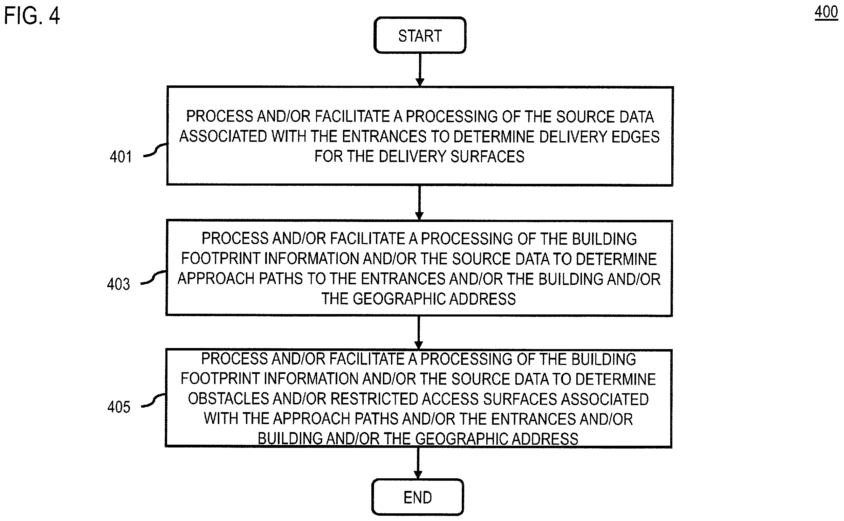

FIG. 4 is a flowchart of a process for determining obstacles and/or restricted access surfaces associated with the geographic address, according to one embodiment. In one embodiment, the package delivery platform 117 performs the process 400 and may be implemented in, for instance, a chip set including a processor and a memory as shown in FIG. 10.

In step 401, the package delivery platform 117 processes and/or facilitates a processing of the source data associated with the entrances to determine delivery edges for the delivery surfaces. In one example embodiment, a delivery edge for a delivery surface is determined to deliver a delivery package at the delivery edge.

Next, in step 403, the package delivery platform 117 processes and/or facilitates a processing of the building footprint information and the source data to determine approach paths to the entrances, building and the geographic address. The approach path may include, but not restricted to, a walkway, a driveway, a porch, and the like, or a combination thereof. In one implementation, the delivery surfaces are associated with the approach paths of the building.

Further, in step 405, the package delivery platform 117 processes and/or facilitates a processing of the building footprint information and the source data to determine obstacles and restricted access surfaces associated with the approach paths, entrances, building and the geographic address. In one implementation, obstacles may be either static obstacles, or mobile obstacles. In one scenario, crowd-sourced information may be used to determine delivery surfaces and restricted access surfaces by using augmented reality and a mobile device such as, a smartphone. For example, a package delivery driver receives the crowd-sourced information by using a mobile device, such as a smartphone, while delivering packages at geographic addresses and updates the crowd-sourced information associated with nearby geographic addresses in the source database 113.

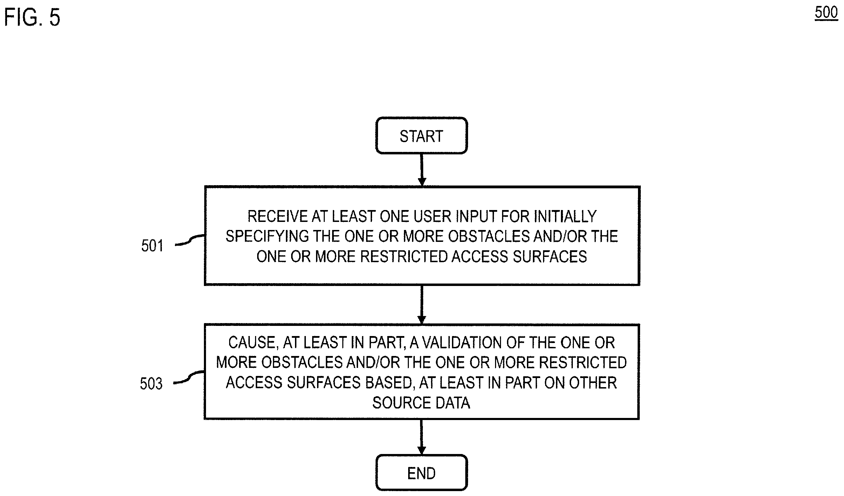

FIG. 5 is a flowchart of a process for validating the obstacles and/or restricted area surfaces associated with the geographic address, according to one embodiment. In one embodiment, the package delivery platform 117 performs the process 500 and may be implemented in, for instance, a chip set including a processor and a memory as shown in FIG. 10.

In step 501, the package delivery platform 117 receives user inputs that specify obstacles and restricted access surfaces associated with the approach paths, entrances, building, geographic address, or a combination thereof. In one example embodiment, a user provides an input specifying that a flowerpot is placed at a porch and a car is parked at a driveway at a geographic address associated with the user. In another embodiment, the package delivery platform 117 may receive user preferences such as a desired approach path, at which the user may desire to receive the delivery package.

Further, in step 503, the package delivery platform 117 causes a validation of the obstacles, restricted access surfaces, or a combination thereof based on other source data. In one scenario, the user inputs specifying the obstacles, and/or restricted access surfaces are validated by gathering other source data from multiple sources, such as the source 111. In one example embodiment, the package delivery platform 117 provides a form to a neighbor of the user to provide information associated with the obstacles and/or restricted access surfaces of the approach paths associated with the geographical location and then the package delivery platform 117 used this information to validate the inputs provided by the user.

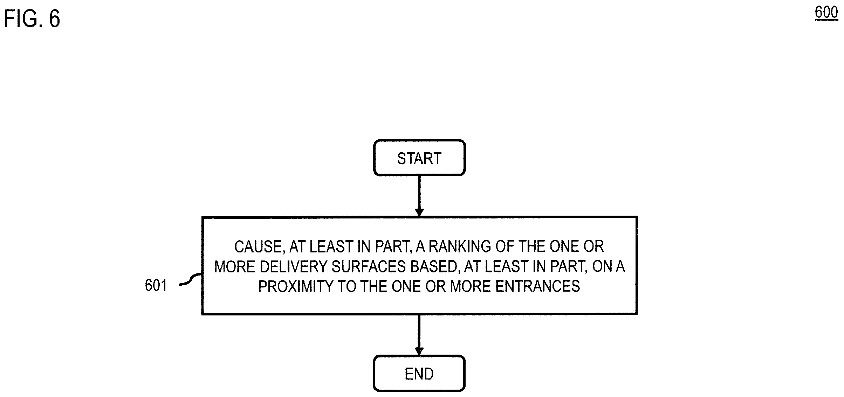

FIG. 6 is a flowchart of a process for ranking the delivery surfaces for the geographic address, according to one embodiment. In one embodiment, the package delivery platform 117 performs the process 600 and is implemented in, for instance, a chip set including a processor and a memory as shown in FIG. 10.

In step 601, the package delivery platform 117 causes ranking of the delivery surfaces for the geographic address based on proximity to the entrances of the building associated with the geographic address. In one example embodiment, three delivery surfaces of the building are determined, then a rank '1' may be generated for a delivery surface of a porch that is nearest to the entrance of the building, a rank '2' may be generated for a delivery surface of a walkway, and a rank '3' may be generated for a driveway that is farthest from the entrance of the building. In another example embodiment, the package delivery platform 117 may generate ranks for the delivery surfaces based on the user preferences.

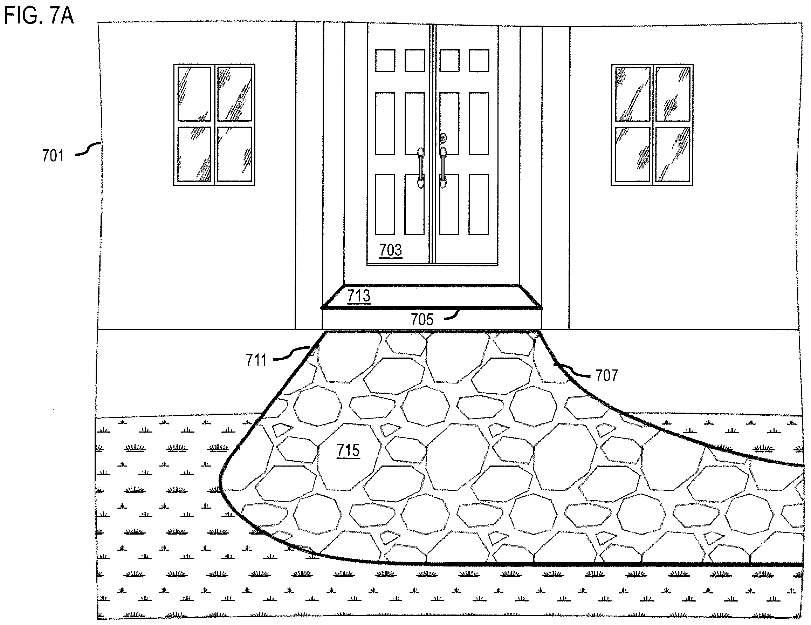

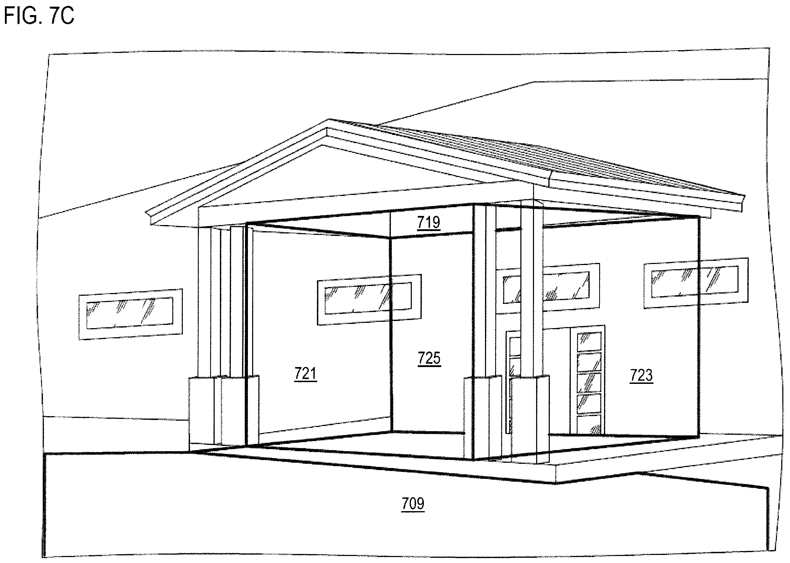

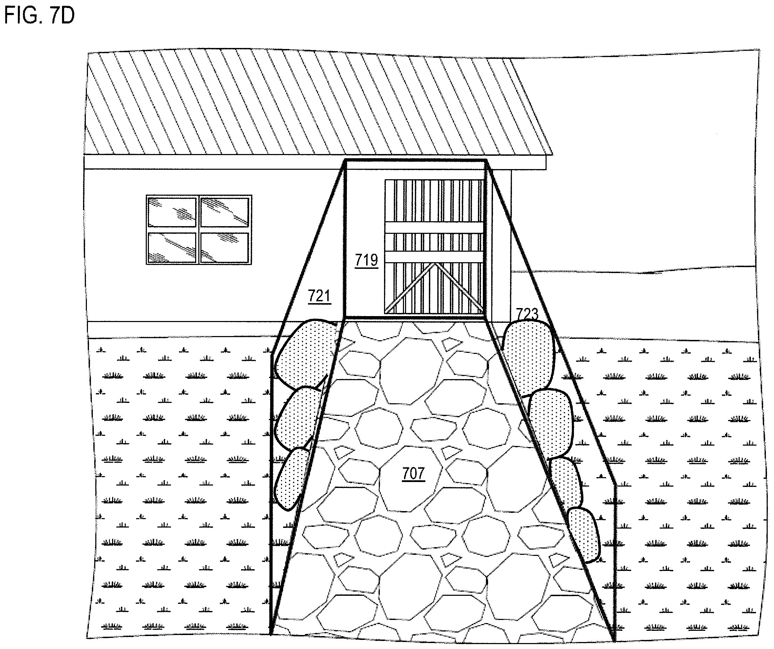

FIGs. 7A-7D are diagrams that represent delivery surfaces and/or delivery edges and/or restricted access surfaces of a building associated with a geographic address, according to one example embodiment. In one scenario, building footprint information and source data associated with a building 701 are determined. The building footprint information may include, but is not restricted to, floor plans, site plans, roof plans elevations, foundation plans, or a combination thereof. The building schematic information may include, but is not restricted to, building's systems (e.g., structural, mechanical, electrical, plumbing, and the like, or a combination thereof), interior and exterior finishes, and the like, or a combination thereof. The package delivery platform 117 also processes the building footprint information and the source data to determine a main entrance 703 of the building 701. Further, the package delivery platform 117 processes the building footprint information and the source data to determine approach paths to the main entrance 703. The approach paths include, but are not restricted to, a porch 705, a walkway 707, and a driveway 709. Further, the package delivery platform 117 determines delivery edges 711 of the delivery surfaces of the approach paths. In one embodiment, one or more delivery surfaces, and their delivery edges are determined based on the approach paths. As shown in FIG. 7A, the package delivery platform 117 determines a delivery surface 713 of the porch 705, a delivery surface 715 of the walkway 707, and a delivery surface 717 of the driveway 709. In one embodiment, the package delivery platform 117 determines restricted access surfaces of the approach paths.

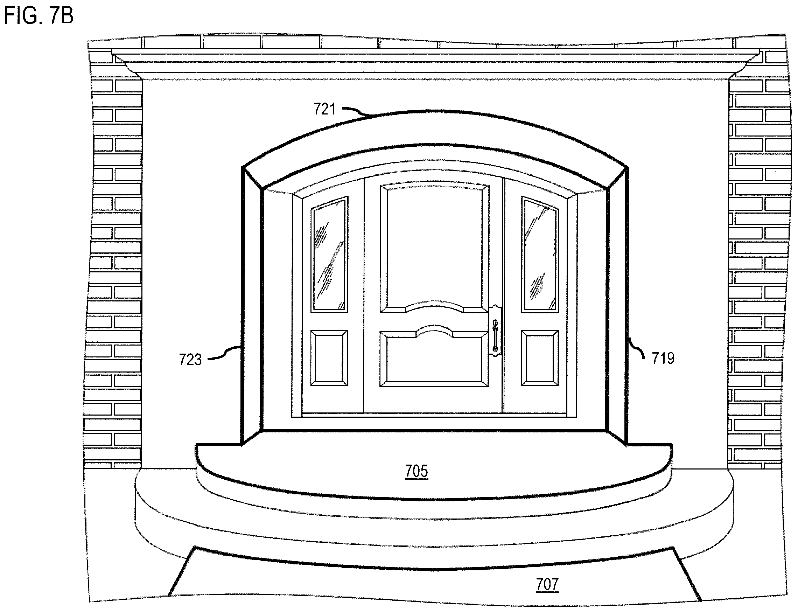

As shown in FIGs. 7B-7D, the package delivery platform 117 determines the main entrance 703 at the porch 705 as a restricted access surface. In one example embodiment, four restricted access surfaces, 'RAS-1' [719], 'RAS-2' [721], 'RAS-3' [723], and 'RAS-4' [725] associated with the porch 705, and the walkway 707 are determined. As these surfaces are restricted access surfaces, the package delivery platform 117 may not deliver delivery packages at the geographic address. The package delivery platform 117 further generates ranks for the delivery surfaces. The delivery surface that is nearest to the entrance may have a higher rank, such as 'rank 1' and the delivery surface that is farthest from the entrance may have a lower rank, such as 'rank 2'. As shown, the delivery surface 713 of the porch 705 may have a higher rank 'rank 1' than the delivery surface 715 of the walkway 707, which may have a lower rank 'rank 2'. In one embodiment, the package delivery platform 117 may not rank the restricted access surfaces. The package delivery platform 117 transmits the location of the delivery surface having a higher rank to an aerial based delivery vehicle to deliver a delivery package at the delivery surface.

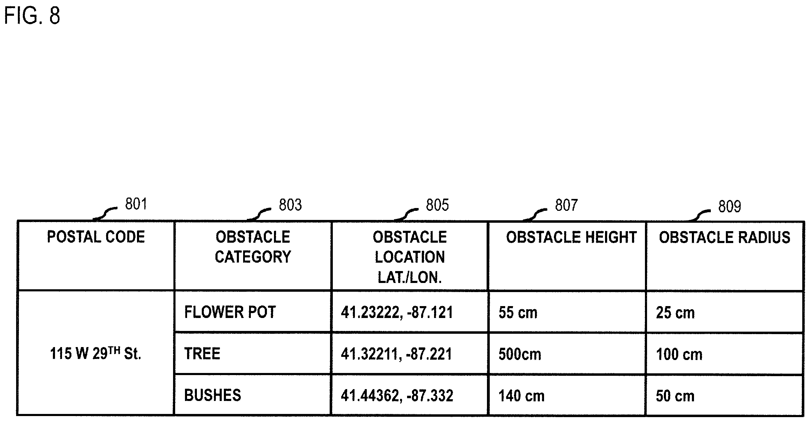

FIG. 8 is a grid diagram that represents information of obstacles at a geographical address, according to one example embodiment. In one scenario, a postal code 801 associated with a geographic address is stored in a database, such as the source database 113. The source database 113 may further store information associated with obstacles present at the geographic address. The information may include, but not restricted to, a category 803, a geographic location 805, a height 807, a radius 809, and the like, or a combination thereof. Examples of obstacle category may include, but is not restricted to, flowerpot, trees, bushes, cars, doormats, and the like. The geographic location of obstacles may include, but is not restricted to, latitude, longitude, altitude, or a combination thereof. In addition, height and radius of obstacles are stored in the source database 113. The information associated with the obstacles may be retrieved from sources 111, for example, LIDAR, building schematics, pedestrian probes, sensors, aerial imagery, and the like, or a combination thereof. For example, the grid stores a postal code "115 W 29^{th} St." of a geographic address. The grid further stores information of obstacles present at the geographic address. As shown, a flowerpot is present at a geographic location '41.23222, -87.121', and the height of the flowerpot is '55 cm' and radius is '25 cm'. Next, a tree is present at a geographic location '41.32211, -87.221', and the height of the tree is '500 cm' and the radius is '100 cm', and also bushes are present at a geographic location '41.44362, -87.332', and the height of the bushes is '140 cm' and the radius is '50 cm'. In such manner, information associated with one or more obstacles present at various geographic addresses may be stored in the source database 113.

The processes described herein for providing delivery locations to aerial based delivery vehicles may be advantageously implemented via software, hardware, firmware or a combination of software and/or firmware and/or hardware. For example, the processes described herein, may be advantageously implemented via processor(s), Digital Signal Processing (DSP) chip, an Application Specific Integrated Circuit (ASIC), Field Programmable Gate Arrays (FPGAs), etc. Such exemplary hardware for performing the described functions is detailed below.

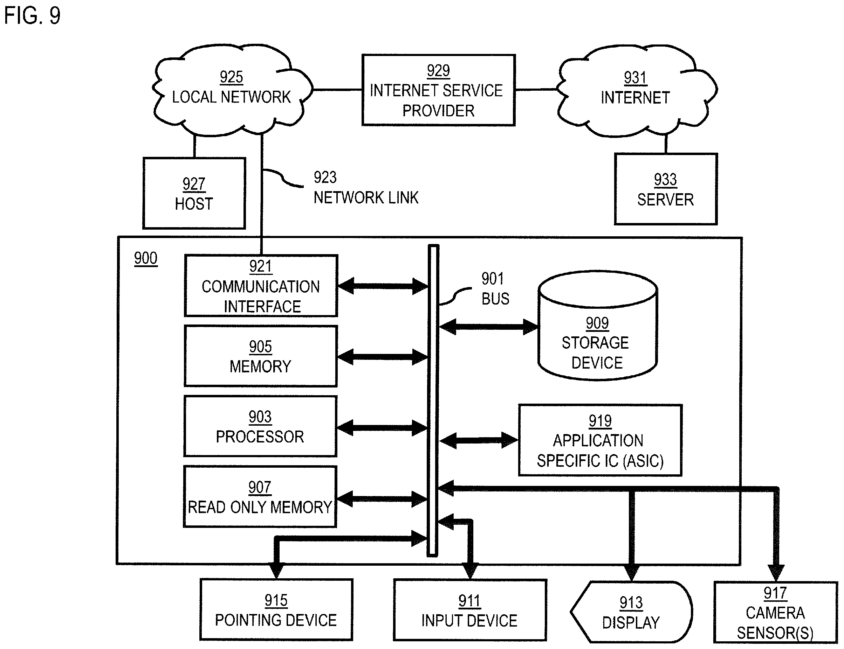

FIG. 9 illustrates a computer system 900 upon which an embodiment of the invention may be implemented. Although computer system 900 is depicted with respect to a particular device or equipment, it is contemplated that other devices or equipment (e.g., network elements, servers, etc.) within FIG. 9 can deploy the illustrated hardware and components of system. The computer system 900 is programmed (e.g., via computer program code or instructions) to determine delivery surfaces associate with a building to deliver packages as described herein and includes a communication mechanism such as a bus 901 for passing information between other internal and external components of the computer system 900. Information (also called data) is represented as a physical expression of a measurable phenomenon, typically electric voltages, but including, in other embodiments, such phenomena as magnetic, electromagnetic, pressure, chemical, biological, molecular, atomic, sub-atomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range. The computer system 900, or a portion thereof, constitutes a means for performing one or more steps of providing delivery locations to aerial based delivery vehicles.

A bus 901 includes one or more parallel conductors of information so that information is transferred quickly among devices coupled to the bus 901. One or more processors 903 for processing information are coupled with the bus 901.

The processor (or multiple processors) 903 performs a set of operations on information as specified by computer program code related to provide delivery locations to aerial based delivery vehicles. The computer program code is a set of instructions or statements providing instructions for the operation of the processor 903 and/or the computer system 900 to perform specified functions. The code, for example, may be written in a computer programming language that is compiled into a native instruction set of the processor 903. The code may also be written directly using the native instruction set (e.g., machine language). The set of operations include bringing information in from the bus 901 and placing information on the bus 901. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 903, such as a sequence of operation codes, constitute processor instructions, also called computer system instructions or, simply, computer instructions. The processors 903 may be implemented as mechanical, electrical, magnetic, optical, chemical, or quantum components, among others, alone or in combination.

The computer system 900 also includes a memory 905 coupled to the bus 901. The memory 905, such as a Random Access Memory (RAM) or any other dynamic storage device, stores information including processor instructions for storing information and instructions to be executed by the processor 903. The dynamic memory 905 allows information stored therein to be changed by the computer system 900. RAM allows a unit of information stored at a location called a memory address to be stored and retrieved independently of information at neighboring addresses. The memory 905 is also used by the processor 903 to store temporary values during execution of processor instructions. The computer system 900 also includes a Read Only Memory (ROM) 907 or any other static storage device coupled to the bus 901 for storing static information, including instructions, that is not changed by the computer system 900. Some memory is composed of volatile storage that loses the information stored thereon when power is lost. Also coupled to the bus 901 is a non-volatile (persistent) storage device 909, such as a magnetic disk, a solid state disk, optical disk or flash card, for storing information, including instructions, that persists even when the computer system 900 is turned off or otherwise loses power.

Information, including instructions for providing delivery locations for aerial delivery package, is provided to the bus 901 for use by the processor 903 from an external input device 911, such as a keyboard containing alphanumeric keys operated by a human user, a microphone, an Infrared (IR) remote control, a joystick, a game pad, a stylus pen, a touch screen, or a sensor. The sensor detects conditions in its vicinity and transforms those detections into physical expression compatible with the measurable phenomenon used to represent information in computer system 900. Other external devices coupled to the bus 901, used primarily for interacting with humans, include a display 913, such as a Cathode Ray Tube (CRT), a Liquid Crystal Display (LCD), a Light Emitting Diode (LED) display, an organic LED (OLED) display, active matrix display, Electrophoretic Display (EPD), a plasma screen, or a printer for presenting text or images, and a pointing device 915, such as a mouse, a trackball, cursor direction keys, or a motion sensor, for controlling a position of a small cursor image presented on the display 913 and issuing commands associated with graphical elements presented on the display 913, and one or more camera sensors 917 for capturing, recording and causing to store one or more still and/or moving images (e.g., videos, movies, etc.) which also may comprise audio recordings. Further, the display 913 may be a touch enabled display such as capacitive or resistive screen. In some embodiments, for example, in embodiments in which the computer system 900 performs all functions automatically without human input, one or more of the external input device 911, the display device 913 and the pointing device 915 may be omitted.

In the illustrated embodiment, special purpose hardware, such as an Application Specific Integrated Circuit (ASIC) 919, is coupled to the bus 901. The special purpose hardware is configured to perform operations not performed by the processor 903 quickly enough for special purposes. Examples of ASICs include graphics accelerator cards for generating images for the display 913, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

The computer system 900 also includes one or more instances of a communication interface 921 coupled to the bus 901. The communication interface 921 provides a one-way or two-way communication coupling to a variety of external devices that operate with their own processors, such as printers, scanners and external disks. In general, the coupling is with a network link 923 that is connected to a local network 925 to which a variety of external devices with their own processors are connected. For example, the communication interface 921 may be a parallel port or a serial port or a Universal Serial Bus (USB) port on a personal computer. In some embodiments, the communication interface 921 is an Integrated Services Digital Network (ISDN) card, a Digital Subscriber Line (DSL) card, or a telephone modem that provides an information communication connection to a corresponding type of telephone line. In some embodiments, the communication interface 921 is a cable modem that converts signals on the bus 901 into signals for a communication connection over a coaxial cable or into optical signals for a communication connection over a fiber optic cable. As another example, the communications interface 1321 may be a Local Area Network (LAN) card to provide a data communication connection to a compatible LAN, such as Ethernet™ or an Asynchronous Transfer Mode (ATM) network. In one embodiment, wireless links may also be implemented. For wireless links, the communication interface 921 sends or receives or both sends and receives electrical, acoustic or electromagnetic signals, including infrared and optical signals that carry information streams, such as digital data. For example, in wireless handheld devices, such as mobile telephones like cell phones, the communication interface 921 includes a radio band electromagnetic transmitter and receiver called a radio transceiver. In certain embodiments, the communication interface 921 enables connection to the communication network 107 for providing delivery locations to aerial based delivery vehicles. Further, the communication interface 921 can include peripheral interface devices, such as a thunderbolt interface, a Personal Computer Memory Card International Association (PCMCIA) interface, etc. Although a single communication interface 921 is depicted, multiple communication interfaces can also be employed.

The term "computer-readable medium" as used herein refers to any medium that participates in providing information to the processor 903, including instructions for execution. Such a medium may take many forms, including, but not limited to, computer-readable storage medium (e.g., non-volatile media, volatile media), and transmission media. Non-transitory media, such as non-volatile media, include, for example, optical or magnetic disks, such as the storage device 909. Volatile media include, for example, the dynamic memory 905. Transmission media include, for example, twisted pair cables, coaxial cables, copper wire, fiber optic cables, and carrier waves that travel through space without wires or cables, such as acoustic waves, optical or electromagnetic waves, including radio, optical and infrared waves. Signals include man-made transient variations in amplitude, frequency, phase, polarization or other physical properties transmitted through the transmission media. Common forms of computer-readable media include, for example, a floppy disk, a flexible disk, hard disk, magnetic tape, any other magnetic medium, a USB flash drive, a Blu-ray disk, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, an EEPROM, a flash memory, any other memory chip or cartridge, a carrier wave, or any other medium from which a computer can read. The term computer-readable storage medium is used herein to refer to any computer-readable medium except transmission media.

Logic encoded in one or more tangible media includes one or both of processor instructions on a computer-readable storage media and special purpose hardware, such as ASIC 919.

The network link 923 typically provides information communication using transmission media through one or more networks to other devices that use or process the information. For example, the network link 923 may provide a connection through the local network 925 to a host computer 927 or to ISP equipment 929 operated by an Internet Service Provider (ISP). The ISP equipment 929 in turn provides data communication services through the public, world-wide packet-switching communication network of networks now commonly referred to as the Internet 931.

A computer called a server host 933 connected to the Internet 931 hosts a process that provides a service in response to information received over the Internet 931. For example, the server host 933 hosts a process that provides information representing video data for presentation at the display 913. It is contemplated that the components of the computer system 900 can be deployed in various configurations within other computer systems, e.g., the host 927 and the server 933.

At least some embodiments of the invention are related to the use of the computer system 900 for implementing some or all of the techniques described herein. According to one embodiment of the invention, those techniques are performed by the computer system 900 in response to the processor 903 executing one or more sequences of one or more processor instructions contained in the memory 905. Such instructions, also called computer instructions, software and program code, may be read into the memory 905 from another computer-readable medium such as the storage device 909 or the network link 923. Execution of the sequences of instructions contained in the memory 905 causes the processor 903 to perform one or more of the method steps described herein. In alternative embodiments, hardware, such as the ASIC 919, may be used in place of or in combination with software to implement the invention. Thus, embodiments of the invention are not limited to any specific combination of hardware and software, unless otherwise explicitly stated herein.

The signals transmitted over the network link 923 and other networks through the communication interface 921, carry information to and from computer system 900. The computer system 900 can send and receive information, including program code, through the networks 925, 931 among others, through the network link 923 and the communication interface 921. In an example using the Internet 931, the server host 933 transmits program code for a particular application, requested by a message sent from the computer system 900, through the Internet 931, ISP equipment 929, the local network 925 and the communication interface 921. The received code may be executed by the processor 903 as it is received, or may be stored in the memory 905 or in the storage device 909 or any other non-volatile storage for later execution, or both. In this manner, the computer system 900 may obtain application program code in the form of signals on a carrier wave.

Various forms of computer readable media may be involved in carrying one or more sequence of instructions or data or both to the processor 903 for execution. For example, instructions and data may initially be carried on a magnetic disk of a remote computer such as the host 927. The remote computer loads the instructions and data into its dynamic memory and sends the instructions and data over a telephone line using a modem. A modem local to the computer system 900 receives the instructions and data on a telephone line and uses an infra-red transmitter to convert the instructions and data to a signal on an infra-red carrier wave serving as the network link 923. An infrared detector serving as the communication interface 921 receives the instructions and data carried in the infrared signal and places information representing the instructions and data onto the bus 901. The bus 901 carries the information to the memory 905 from which the processor 903 retrieves and executes the instructions using some of the data sent with the instructions. The instructions and data received in the memory 905 may optionally be stored on the storage device 909, either before or after execution by the processor 903.

FIG. 10 illustrates a chip set or chip 1000 upon which an embodiment of the invention may be implemented. The chip set 1000 is programmed to process and transmit sensor data in a bandwidth efficient manner as described herein and includes, for instance, the processor and memory components described with respect to FIG. 9 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set 1000 can be implemented in a single chip. It is further contemplated that in certain embodiments the chip set or chip 1000 can be implemented as a single "system on a chip." It is further contemplated that in certain embodiments a separate ASIC would not be used, for example, and that all relevant functions as disclosed herein would be performed by a processor or processors. The chip set or chip 1000, or a portion thereof, constitutes a means for performing one or more steps of providing user interface navigation information associated with the availability of functions. The chip set or chip 1000, or a portion thereof, constitutes a means for performing one or more steps of providing delivery locations to aerial based delivery vehicles.

In one embodiment, the chip set or chip 1000 includes a communication mechanism such as a bus 1001 for passing information among the components of the chip set 1000. A processor 1003 has connectivity to the bus 1001 to execute instructions and process information stored in, for example, a memory 1005. The processor 1003 may include one or more processing cores with each core configured to perform independently. A multi-core processor enables multiprocessing within a single physical package. Examples of a multi-core processor include two, four, eight, or greater numbers of processing cores. Alternatively or in addition, the processor 1003 may include one or more microprocessors configured in tandem via the bus 1001 to enable independent execution of instructions, pipelining, and multithreading. The processor 1003 may also be accompanied with one or more specialized components to perform certain processing functions and tasks such as one or more Digital Signal Processors (DSP) 1007, or one or more Application-Specific Integrated Circuits (ASIC) 1009. The DSP 1007 typically is configured to process real-world signals (e.g., sound) in real time independently of the processor 1003. Similarly, the ASIC 1009 can be configured to performed specialized functions not easily performed by a more general purpose processor. Other specialized components to aid in performing the inventive functions described herein may include one or more Field Programmable Gate Arrays (FPGA), one or more controllers, or one or more other special-purpose computer chips.

In one embodiment, the chip set or chip 1000 includes merely one or more processors and some software and/or firmware supporting and/or relating to and/or for the one or more processors.

The processor 1003 and accompanying components have connectivity to the memory 1005 via the bus 1001. The memory 1005 includes both dynamic memory (e.g., RAM, magnetic disk, writable optical disk, etc.) and static memory (e.g., ROM, CD-ROM, etc.) for storing executable instructions that when executed perform the inventive steps described herein to provide delivery locations to aerial based delivery vehicles. The memory 1005 also stores the data associated with or generated by the execution of the inventive steps.

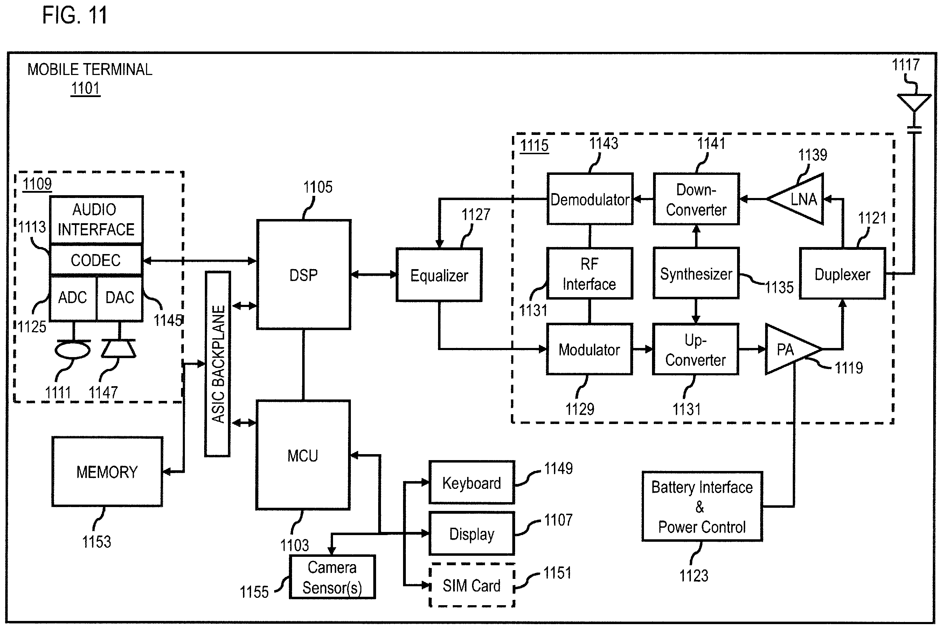

FIG. 11 is a diagram of exemplary components of a mobile terminal 1101 (e.g., handset) for communications, which is capable of operating in the system of FIG. 1, according to one embodiment. In some embodiments, the mobile terminal 1101, or a portion thereof, constitutes a means for providing delivery locations to aerial based delivery vehicles. Generally, a radio receiver is often defined in terms of front-end and back-end characteristics. The front-end of the receiver encompasses all of the Radio Frequency (RF) circuitry whereas the back-end encompasses all of the base-band processing circuitry. As used in this application, the term "circuitry" refers to both: (1) hardware-only implementations (such as implementations in only analog and/or digital circuitry), and (2) to combinations of circuitry and software (and/or firmware) (such as, if applicable to the particular context, to a combination of processor(s), including digital signal processor(s), software, and memory(ies) that work together to cause an apparatus, such as a mobile phone or server, to perform various functions). This definition of "circuitry" applies to all uses of this term in this application, including in any claims. As a further example, as used in this application and if applicable to the particular context, the term "circuitry" would also cover an implementation of merely a processor (or multiple processors) and its (or their) accompanying software/or firmware. The term "circuitry" would also cover if applicable to the particular context, for example, a baseband integrated circuit or applications processor integrated circuit in a mobile phone or a similar integrated circuit in a cellular network device or other network devices.

Pertinent internal components of the telephone include a Main Control Unit (MCU) 1103, a Digital Signal Processor (DSP) 1105, and a receiver/transmitter unit including a microphone gain control unit and a speaker gain control unit. A main display unit 1107 provides a display to the user in support of various applications and mobile terminal functions that perform or support the steps of providing delivery locations to aerial based delivery vehicles. The display 1107 includes display circuitry configured to display at least a portion of a user interface of the mobile terminal 1101 (e.g., mobile telephone). Additionally, the display 1107 and display circuitry are configured to facilitate user control of at least some functions of the mobile terminal 1101. An audio function circuitry 1109 includes a microphone 1111 and microphone amplifier that amplifies the speech signal output from the microphone 1111. The amplified speech signal output from the microphone 1111 is fed to a coder/decoder (CODEC) 1113.

A radio section 1115 amplifies power and converts frequency in order to communicate with a base station, which is included in a mobile communication system, via antenna 1117. The antenna 1117 may work on Multiple Input Multiple Output (MIMO). MIMO is generally a part of wireless communication standards, such as IEEE 802.11 (Wi-Fi), 3G, WiMAX (4G), Long Term Evolution (LTE), and the like. The power amplifier (PA) 1119 and the transmitter/modulation circuitry are operationally responsive to the MCU 1103, with an output from the PA 1119 coupled to a duplexer 1121 or circulator or antenna switch, as known in the art. The PA 1119 also couples to a battery interface and a power control unit 1123.

In use, a user of the mobile terminal 1101 speaks into the microphone 1111 and his or her voice along with any detected background noise is converted into an analog voltage. The analog voltage is then converted into a digital signal through an Analog to Digital Converter (ADC) 1125. The control unit 1103 routes the digital signal into the DSP 1105 for processing therein, such as speech encoding, channel encoding, encrypting, and interleaving. In one embodiment, the processed voice signals are encoded, by units not separately shown, using a cellular transmission protocol such as Enhanced Data rates for Global Evolution (EDGE), General Packet Radio Service (GPRS), Global System for Mobile Communications (GSM), Internet protocol Multimedia Subsystem (IMS), Universal Mobile Telecommunications System (UMTS), etc., as well as any other suitable wireless medium, e.g., microwave access (WiMAX), Long Term Evolution (LTE) networks, Code Division Multiple Access (CDMA), Wideband Code Division Multiple Access (WCDMA), Wireless Fidelity (Wi-Fi), satellite, and the like, or any combination thereof.

The encoded signals are then routed to an equalizer 1127 for compensation of any frequency-dependent impairments that occur during transmission though the air such as phase and amplitude distortion. After equalizing the bit stream, a modulator 1129 combines the signal with a RF signal generated in the RF interface 1131. The modulator 1129 generates a sine wave by way of frequency or phase modulation. In order to prepare the signal for transmission, an up-converter 1133 combines the sine wave output from the modulator 1129 with another sine wave generated by a synthesizer 1135 to achieve the desired frequency of transmission. The signal is then sent through the PA 1119 to increase the signal to an appropriate power level. In practical systems, the PA 1119 acts as a variable gain amplifier whose gain is controlled by the DSP 1105 from information received from a network base station. The signal is then filtered within the duplexer 1121 and optionally sent to an antenna coupler 1137 to match impedances to provide maximum power transfer. Finally, the signal is transmitted via the antenna 1117 to a local base station. An Automatic Gain Control (AGC) can be supplied to control the gain of the final stages of the receiver. The signals may be forwarded from there to a remote telephone which may be another cellular telephone, any other mobile phone or a land-line connected to a Public Switched Telephone Network (PSTN), or other telephony networks.

Voice signals transmitted to the mobile terminal 1101 are received via the antenna 1117 and immediately amplified by a Low Noise Amplifier (LNA) 1139. A down-converter 1141 lowers the carrier frequency while a demodulator 1143 strips away the RF leaving only a digital bit stream. The signal then goes through the equalizer 1127 and is processed by the DSP 1105. A Digital to Analog Converter (DAC) 1145 converts the signal and the resulting output is transmitted to the user through a speaker 1147, all under control of the Main Control Unit (MCU) 1103 that can be implemented as a Central Processing Unit (CPU).

The MCU 1103 receives various signals including input signals from a keyboard 1149. The keyboard 1149 and/or the MCU 1103 in combination with other user input components (e.g., the microphone 1111) comprise a user interface circuitry for managing user input. The MCU 1103 runs user interface software to facilitate user control of at least some functions of the mobile terminal 1101 to provide delivery locations to aerial based delivery vehicles. The MCU 1103 also delivers a display command and a switch command to the display 1107 and to the speech output switching controller, respectively. Further, the MCU 1103 exchanges information with the DSP 1105 and can access an optionally incorporated SIM card 1151 and a memory 1153. In addition, the MCU 1103 executes various control functions required of the terminal. The DSP 1105 may, depending upon the implementation, perform any of a variety of conventional digital processing functions on the voice signals. Additionally, the DSP 1105 determines the background noise level of the local environment from the signals detected by the microphone 1111 and sets the gain of microphone 1111 to a level selected to compensate for the natural tendency of the user of the mobile terminal 1101.

The CODEC 1113 includes the ADC 1125 and DAC 1145. The memory 1153 stores various data including call incoming tone data and is capable of storing other data including music data received via, e.g., the global Internet. The software module could reside in RAM memory, flash memory, registers, or any other form of writable storage medium known in the art. The memory 1153 may be, but not limited to, a single memory, CD, DVD, ROM, RAM, EEPROM, optical storage, magnetic disk storage, flash memory storage, or any other non-volatile storage medium capable of storing digital data.

An optionally incorporated SIM card 1151 carries, for instance, important information, such as the cellular phone number, the carrier supplying service, subscription details, and security information. The SIM card 1151 serves primarily to identify the mobile terminal 1101 on a radio network. The SIM card 1151 also contains a memory for storing a personal telephone number registry, text messages, and user specific mobile terminal settings.

Further, one or more camera sensors 1155 may be incorporated onto the mobile station 1101 wherein the one or more camera sensors 1155 may be placed at one or more locations on the mobile station 1101. Generally, the camera sensors 1155 may be utilized to capture, record, and cause to store one or more still and/or moving images (e.g., videos, movies, etc.) which also may comprise audio recordings.

While the invention has been described in connection with a number of embodiments and implementations, the invention is not so limited but covers various obvious modifications and equivalent arrangements, which fall within the purview of the appended claims.

## Claims

1. A method implemented by an apparatus (117, 900, 1000), the method comprising:
a determination (301) of building footprint information for at least one building associated with at least one geographic address;
a determination (303) of source data associated with the at least one building, the at least one geographic address, or a combination thereof, wherein the source data include at least one of Light Detection And Ranging (LIDAR) information, building schematic information, probe data, sensor data, aerial imagery data, depth map information, imagery information, crowd-sourced information, or a combination thereof;
a processing (305) of the building footprint information and the source data to determine one or more entrances associated with the at least one building; and
a processing (307) of the source data associated with the one or more entrances (703) to determine one or more delivery surfaces (713, 715) for the at least one geographic address, wherein the one or more delivery surfaces are for delivering one or more packages by an aerial-based package delivery.

2. A method of claim 1, further comprising:
a processing (401) of the source data associated with the one or more entrances (703) to determine one or more delivery edges (711) for the one or more delivery surfaces (713, 715),
wherein the one or more delivery edges represents a preferred side of the one or more delivery surfaces for placing one or more delivery packages.

3. A method of claim 2, wherein the one or more delivery edges (711) are determined if the one or more delivery surfaces (713, 715) is larger than at least one threshold size.

4. A method according to any of claims 2-3, further comprising:
processing (403) of the building footprint information, the source data, or a combination thereof to determine one or more approach paths to the one or more entrances (703), the at least one building, the at least one geographic address, or a combination thereof,
wherein the one or more delivery surfaces (713, 715), the one or more entrances (703), or a combination thereof are further determined based, at least in part, on the one or more approach paths.

5. A method of claim 4,further comprising:
processing and/or facilitating a processing (405) of the building footprint information, the source data, or a combination thereof to determine one or more obstacles, one or more restricted access surfaces, or a combination thereof associated with the one or more approach paths, the one or more entrances (703), the at least one building, the at least one geographic address, or a combination thereof,
wherein the one or more obstacles are with respect to an aerial-based package delivery, and
wherein the one or more restricted access surfaces are associated with one or more delivery surfaces (713, 715) and are impenetrable with respect to the aerial-based package delivery.

6. A method of claim 5,further comprising:
receiving at least one user input for initially specifying the one or more obstacles, the one or more restricted access surfaces, or a combination thereof.

7. A method according to any of claims 5-6,further comprising:
causing (503) a validation of the one or more obstacles, the one or more restricted access surfaces, or a combination thereof based, at least in part on other source data.

8. A method according to any of claims 1-7, further comprising:
causing (601) a ranking of the one or more delivery surfaces (713, 715) based, at least in part, on a proximity to the one or more entrances.

9. A computer-readable storage medium carrying one or more sequences of one or more instructions which, when executed by one or more processors (903, 1003), cause an apparatus (900, 1000) to perform at least a method of any of claims 1-8.

10. An apparatus comprising means for performing at least a method of any of claims 1-8.

11. An apparatus of claim 10, wherein the apparatus is a terminal further comprising:
user interface circuitry and user interface software configured to facilitate user control of at least some functions of the terminal through use of a display and configured to respond to user input; and
a display and display circuitry configured to display at least a portion of a user interface of the terminal, the display and display circuitry configured to facilitate user control of at least some functions of the terminal.

12. A computer program product including one or more sequences of one or more instructions which, when executed by one or more processors (903, 1003), cause an apparatus (900, 1000) to at least perform at least a method of any of claims 1-8.

## Patentansprüche

1. Verfahren, umgesetzt durch eine Vorrichtung (117, 900, 1000), wobei das Verfahren Folgendes umfasst:
Erfassen (301) von Gebäude-Grundflächeninformationen für mindestens ein mit mindestens einer geografischen Adresse assoziierten Gebäude;
Erfassen (303) von mit dem mindestens einen Gebäude, der mindestens einen geographischen Adresse oder einer Kombination aus diesen assoziierten Quelldaten, wobei die Quelldaten mindestens eines der Folgenden enthalten: "Light Detection and Ranging"- (LIDAR-) Informationen, schematische Gebäudeinformationen, Sondendaten, Sensordaten, Luftbilddaten, Tiefenkarteninformationen, Bildinformationen, Crowd-Sourcing-Informationen, oder eine Kombination aus diesen;
Verarbeiten (305) der Gebäude-Grundflächeninformationen und der Quelldaten zum Bestimmen eines oder mehrerer mit dem mindestens einen Gebäude assoziierten Eingänge; und
Verarbeiten (307) der mit dem einen oder den mehreren Eingängen (703) assoziierten Quelldaten zum Bestimmen einer oder mehrerer Auslieferungsflächen (713, 715) für die mindestens eine geografische Adresse, wobei die eine oder die mehreren Auslieferungsflächen zur Auslieferung eines oder mehrerer Pakete durch eine luftbasierte Paketauslieferung dienen.

2. Verfahren nach Anspruch 1, ferner umfassend:
Verarbeiten (401) der mit dem einen oder den mehreren Eingängen (703) assoziierten Quelldaten zum Bestimmen einer oder mehrerer Auslieferungskanten (711) für die eine oder die mehreren Auslieferungsflächen (713, 715),
wobei die eine oder die mehreren Auslieferungskanten eine bevorzugte Seite der einen oder der mehreren Auslieferungsflächen zum Platzieren eines oder mehrerer Auslieferungspakete darstellen.

3. Verfahren nach Anspruch 2, wobei die eine oder die mehreren Auslieferungskanten (711) bestimmt werden, wenn die eine oder die mehreren Auslieferungsflächen (713, 715) größer als mindestens eine Schwellengröße sind.

4. Verfahren nach einem der Ansprüche 2 bis 3, ferner umfassend:
Verarbeiten (403) der Gebäude-Grundflächeninformationen, der Quelldaten, oder einer Kombination aus diesen, zum Bestimmen einer oder mehrerer Einflugschneisen zu dem einen oder den mehreren Eingängen (703), dem mindestens einen Gebäude, der mindestens einen geografischen Adresse, oder einer Kombination aus diesen,
wobei die eine oder die mehreren Auslieferungsflächen (713, 715), der eine oder die mehreren Eingänge (703), oder eine Kombination aus diesen, ferner mindestens teilweise auf Grundlage der einen oder der mehreren Einflugschneisen bestimmt werden.

5. Verfahren nach Anspruch 4, ferner umfassend:
Verarbeiten und/oder Ermöglichen eines Verarbeitens (405) der Gebäude-Grundflächeninformationen, der Quelldaten, oder einer Kombination aus diesen, zum Bestimmen eines oder mehrerer mit der einen oder den mehreren Einflugschneisen, dem einen oder den mehreren Eingängen (703), dem mindestens einen Gebäude, der mindestens einen geografischen Adresse, oder einer Kombination aus diesen assoziierter Hindernisse, einer oder mehrerer mit der einen oder den mehreren Einflugschneisen, dem einen oder den mehreren Eingängen (703), dem mindestens einen Gebäude, der mindestens einen geografischen Adresse, oder einer Kombination aus diesen assoziierter beschränkter Zugangsflächen, oder einer Kombination aus diesen,
wobei das eine oder die mehreren Hindernisse im Hinblick auf eine luftbasierte Paketauslieferung bestehen, und
wobei die eine oder die mehreren beschränkten Zugangsflächen mit einer oder mehreren Auslieferungsflächen (713, /15) assoziiert sind und im Hinblick auf die luftbasierte Paketauslieferung undurchdringbar sind.

6. Verfahren nach Anspruch 5, ferner umfassend:
Empfangen von mindestens einer Benutzereingabe zum erstmaligen Spezifizieren des einen oder der mehreren Hindernisse, der einen oder der mehreren beschränkten Zugangsflächen, oder einer Kombination aus diesen.

7. Verfahren nach einem der Ansprüche 5 bis 6, ferner umfassend:
Veranlassen (503) einer Bestätigung des einen oder der mehreren Hindernisse, der einen oder der mehreren beschränkten Zugangsflächen, oder einer Kombination aus diesen, auf der Grundlage von mindestens teilweise anderen Quelldaten.

8. Verfahren nach einem der Ansprüche 1 bis 7, ferner umfassend:
Veranlassen (601) einer Rangliste der einen oder der mehreren Auslieferungsflächen (713, 715) auf der Grundlage von mindestens teilweise einer Nähe zu dem einen oder den mehreren Eingängen.

9. Computerlesbares Speichermedium, das eine oder mehrere Sequenzen einer oder mehrerer Anweisungen speichert, die, wenn sie von einem oder mehreren Prozessoren (903, 1003) ausgeführt werden, eine Vorrichtung (900, 1000) veranlassen, mindestens ein Verfahren nach einem der Ansprüche 1 bis 8 auszuführen.

10. Vorrichtung, umfassend Mittel zum Durchführen mindestens eines Verfahrens nach einem der Ansprüche 1 bis 8.

11. Vorrichtung nach Anspruch 10, wobei die Vorrichtung ein Endgerät ist, ferner umfassend:
eine Benutzeroberflächenschaltung und eine Benutzeroberflächensoftware, eingerichtet zum Unterstützen der Benutzersteuerung von mindestens einigen Funktionen des Endgeräts durch die Verwendung eines Displays und eingerichtet zum Reagieren auf eine Benutzereingabe; und
ein Display und eine Displayschaltung, eingerichtet zum Anzeigen mindestens eines Teils einer Benutzerschnittstelle des Endgeräts, wobei das Display und die Displayschaltung zum Unterstützen der Benutzersteuerung von mindestens einigen Funktionen des Endgeräts eingerichtet sind.

12. Computer-Programmprodukt, umfassend eine oder mehrere Sequenzen einer oder mehrerer Anweisungen, die, wenn sie von einem oder mehreren Prozessoren (903,1003) ausgeführt werden, eine Vorrichtung (900, 1000) veranlassen, mindestens ein Verfahren nach einem der Ansprüche 1 bis 8 auszuführen.

## Revendications

1. Procédé mis en oeuvre par un appareil (117, 900, 1000), le procédé comprenant :
une détermination (301) d'informations d'empreinte de bâtiment pour au moins un bâtiment associé à au moins une adresse géographique ;
une détermination (303) de données sources associées audit au moins un bâtiment, à ladite au moins une adresse géographique, ou à une combinaison de ceux-ci, dans laquelle les données sources comprennent au moins un des éléments parmi :
des informations de détection et de télémétrie par la lumière (LIDAR), des informations de schémas de bâtiment, des données de sondes, des données de capteurs, des données d'imagerie aérienne, des informations de cartes de profondeur, des informations d'imagerie, des informations de sources participatives ou une combinaison de celles-ci ;
un traitement (305) des informations d'empreinte de bâtiment et des données sources pour déterminer une ou plusieurs entrées associées audit au moins un bâtiment ; et
un traitement (307) des données sources associées auxdites une ou plusieurs entrées (703) pour déterminer une ou plusieurs surfaces de livraison (713, 715) pour ladite au moins une adresse géographique, dans lequel lesdites une ou plusieurs surfaces de livraison sont destinées à délivrer un ou plusieurs colis par une livraison aérienne de colis.

2. Procédé selon la revendication 1, comprenant en outre :
un traitement (401) des données sources associées auxdites une ou plusieurs entrées (703) pour déterminer un ou plusieurs bords de livraison (711) pour lesdites une ou plusieurs surfaces de livraison (713, 715),
dans lequel lesdits un ou plusieurs bords de livraison représentent un côté préféré desdites une ou plusieurs surfaces de livraison pour placer un ou plusieurs colis de livraison.

3. Procédé selon la revendication 2, dans lequel lesdits un ou plusieurs bords de livraison (711) sont déterminés si lesdites une ou plusieurs surfaces de livraison (713, 715) sont supérieures à au moins une taille de seuil.

4. Procédé selon l'une quelconque des revendications 2 à 3, comprenant en outre :
un traitement (403) des informations d'empreinte de bâtiment, des données sources ou d'une combinaison de celles-ci pour déterminer un ou plusieurs trajets d'approche jusqu'auxdites une ou plusieurs entrées (703), audit au moins un bâtiment, à ladite au moins une adresse géographique ou à une combinaison de ceux-ci,
dans lequel lesdites une ou plusieurs surfaces de livraison (713, 715), lesdites une ou plusieurs entrées (703) ou une combinaison de celles-ci sont en outre déterminées sur la base, au moins en partie, desdits un ou plusieurs chemins d'approche.

5. Procédé selon la revendication 4, comprenant en outre les étapes consistant à :
traiter et / ou faciliter un traitement (405) des informations d'empreinte de bâtiment, des données sources, ou d'une combinaison de celles-ci pour déterminer un ou plusieurs obstacles, une ou plusieurs surfaces d'accès restreint, ou une combinaison de ceux-ci, associés audits un ou plusieurs trajets d'approche, auxdites une ou plusieurs entrées (703), audit au moins un bâtiment, à ladite au moins une adresse géographique, ou à une combinaison de ceux-ci,
dans lequel lesdits un ou plusieurs obstacles se rapportent à une livraison aérienne de colis, et dans lequel lesdites une ou plusieurs surfaces d'accès restreint sont associées à une ou plusieurs surfaces de livraison (713, 715) et sont impénétrables par rapport à la livraison aérienne de colis.

6. Procédé selon la revendication 5, comprenant en outre l'étape consistant à :
recevoir au moins une entrée utilisateur pour spécifier initialement lesdits un ou plusieurs obstacles, lesdites une ou plusieurs surfaces d'accès restreint ou une combinaison de ceux-ci.

7. Procédé selon l'une quelconque des revendications 5 à 6, comprenant en outre l'étape consistant à :
provoquer (503) une validation desdits un ou plusieurs obstacles, desdites une ou plusieurs surfaces d'accès restreints, ou d'une combinaison de ceux-ci sur la base, au moins en partie, d'autres données sources.

8. Procédé selon l'une quelconque des revendications 1 à 7, comprenant en outre l'étape consistant à :
provoquer (601) un classement desdites une ou plusieurs surfaces de livraison (713, 715) sur la base, au moins en partie, d'une proximité desdites une ou plusieurs entrées.

9. Support de stockage lisible par ordinateur portant une ou plusieurs séquences d'une ou plusieurs instructions qui, lorsqu'elles sont exécutées par un ou plusieurs processeurs (903, 1003), amènent un appareil (900, 1000) à réaliser au moins un procédé selon l'une quelconque des revendications 1 à 8.

10. Appareil comprenant des moyens pour effectuer au moins un procédé selon l'une quelconque des revendications 1 à 8.

11. Appareil selon la revendication 10, dans lequel l'appareil est un terminal comprenant en outre un circuit d'interface utilisateur et un logiciel d'interface utilisateur configurés pour faciliter le contrôle par l'utilisateur d'au moins certaines fonctions du terminal par l'utilisation d'un affichage et configuré pour répondre à une entrée utilisateur ; et
un affichage et un circuit d'affichage configurés pour afficher au moins une partie d'une interface utilisateur du terminal, l'affichage et le circuit d'affichage étant configurés pour faciliter le contrôle par l'utilisateur d'au moins certaines fonctions du terminal.

12. Produit de programme informatique comprenant une ou plusieurs séquences d'une ou plusieurs instructions qui, lorsqu'elles sont exécutées par un ou plusieurs processeurs (903, 1003), amènent un appareil (900, 1000) à réaliser au moins un procédé selon l'une quelconque des revendications 1 à 8.
